# DEMANDE DE BREVET EUROPEEN

(11) **EP 1 139 556 A1**
(43) Date de publication de la demande: **04.10.2001**
(21) Numéro de dépôt: 01400585.4
(22) Date de dépôt: 06.03.2001
(51) Int. Cl.: H02P 6/00, B67B 3/20, H02P 6/04

(54) **Dispositif, procédé et programme de commande de moteur électrique**

(30) Priorité: 30.03.2000 FR 0004011
(71) Demandeur: ETABLISSEMENTS ANDRE ZALKIN ET CIE, 92500 Rueil Malmaison (FR)
(72) Inventeur: Zalkin, Daniel, 27390 Saint Laurent du Tencement (FR); Ostrowski, Laurent, 27300 Bernay (FR); Matthys, Philippe, 27390 Montreuil L'Argille (FR)
(74) Mandataire: Casalonga, Axel

(57) **Abrégé**

Le dispositif est destiné à la commande d'au moins un moteur électrique 1 et comprend au moins un moyen de mesure du courant Iₘ consommé par le moteur, un moyen de mesure 2 du couple Cₘ fourni par le moteur 1, au moins un moyen d'alimentation 4 du moteur, et une unité d'initialisation 16 capable de générer une consigne de couple C_{c}, et de recevoir et de traiter des informations relatives au courant Iₘ et au couple Cₘ, pour en déduire une relation entre la consigne C_{c'} le couple Cₘ et le courant Iₘ pour pouvoir déterminer le couple Cₘ à partir de la consigne C_{c} et du courant Iₘ.

## Description

La présente invention concerne le domaine de la commande de moteur électrique, notamment de l'étalonnage d'une chaîne de conversion de l'énergie.

La présente invention peut s'appliquer dans les domaines où un moteur électrique doit appliquer un couple à un objet, et ce de façon précise, par exemple dans le domaine du vissage, notamment de capsules d'obturation filetées.

De façon connue par le document EP 0 524 196, un dispositif de vissage comprend un cône de bouchage, un moteur pour entraîner en rotation le cône de bouchage, un dispositif de commutation, et une alimentation en énergie. Un ensemble de commande comprend un capteur de couple destiné à la mesure d'un coupe d'entraînement instantané, un comparateur du couple instantané avec un couple d'obturation de valeur prédéterminée, et un capteur de l'angle de rotation de l'élément de réception de capsule apte à être activé seulement lorsque le couple instantané atteint la valeur prédéterminée. Ainsi, un couple d'entraînement est appliqué à un bouchon pour le visser sur un conteneur, un couple instantané appliqué au bouchon est mesuré, comparé avec un couple d'obturation de valeur prédéterminée, et l'angle de rotation de la capsule est mesuré seulement lorsque le couple instantané atteint ladite valeur prédéterminée.

Toutefois, la présence d'un capteur de couple et d'un capteur angulaire entraîne une certaine complication du dispositif sans garantir une fiabilité élevée d'une obturation convenable des conteneurs par les capsules.

La présente invention propose, notamment, un dispositif et un procédé de commande perfectionné permettant une haute précision du couple appliqué.

La présente invention propose, notamment, un procédé d'étalonnage économique réduisant la durée des opérations d'étalonnage d'entretien effectuées régulièrement au cours de la vie d'un moteur électrique.

Le dispositif, selon un aspect de l'invention, est destiné à la commande d'au moins un moteur électrique et comprend au moins un moyen de mesure du courant Iₘ consommé par le moteur, un moyen de mesure du couple Cₘ fourni par le moteur, au moins un moyen d'alimentation du moteur, et une unité d'initialisation capable de générer une consigne de couple C_{c}, et de recevoir et de traiter des informations relatives au courant Iₘ et au couple Cₘ, pour en déduire une relation entre la consigne C_{c}, le couple Cₘ et le courant Iₘ pour pouvoir déterminer le couple Cₘ à partir de la consigne C_{c} et du courant Iₘ.

Avantageusement, le moyen de mesure du couple Cₘ, fourni par le moteur, est amovible. Il peut être enlevé après un étalonnage, le couple Cₘ étant commandé à partir de la consigne C_{c} et vérifié à partir du courant Iₘ.

Dans un mode de réalisation de l'invention, le dispositif comprend une unité de calcul associée à des moyens mémoire et à une interface utilisateur, un premier bus de données entre l'unité d'initialisation et le moyen d'alimentation du moteur, et un second bus de données entre l'unité d'initialisation et l'unité de calcul.

Dans un mode de réalisation de l'invention, le moyen de mesure du couple Cₘ est pourvu d'un étalon amovible pour étalonner ledit moyen de mesure du couple lui même.

Le dispositif peut être destiné à la commande d'une pluralité de moteurs et comprendre un nombre correspondant de moyens de mesure du courant, et de moyens d'alimentation du moteur.

L'invention concerne aussi un système électromécanique comprenant au moins un dispositif tel que ci-dessus. Le système peut être une machine devant appliquer un couple déterminé à un objet, par exemple une machine de vissage, de perçage, de taraudage, de bouchage, etc.

Le procédé, selon un aspect de l'invention, est destiné à la commande d'au moins un moteur électrique. Une unité d'initialisation génère une consigne de couple C_{c}, à destination d'un moyen d'alimentation du moteur. Au moins un moyen de mesure du courant mesure le courant Iₘ consommé par le moteur. Un moyen de mesure du couple mesure le couple Cₘ fourni par le moteur. L'unité d'initialisation reçoit et traite des informations relatives au courant Iₘ et au couple Cₘ, pour en déduire une relation entre la consigne C_{c}, le couple Cₘ et le courant Iₘ pour pouvoir déterminer le couple Cₘ à partir de la consigne C_{c} et du courant Iₘ.

De préférence, le moyen de mesure du couple est installé au préalable, puis ôté après la mesure d'au moins une valeur du couple Cₘ. Un moyen de mesure du couple peut servir à plusieurs moteurs électriques.

Dans un mode de réalisation de l'invention, l'unité d'initialisation génère n valeurs de consigne de couple C_{c}, avec n supérieur à 2, le moyen de mesure du courant mesure n valeurs de courant Iₘ consommé par le moteur, le moyen de mesure du couple mesure n valeurs de couple Cₘ fourni par le moteur, l'unité d'initialisation reçoit et traite n valeurs relatives au courant Iₘ et au couple Cₘ, pour en déduire une relation entre la consigne C_{c}, le couple Cₘ et le courant Iₘ pour pouvoir déterminer le couple Cₘ à partir de la consigne C_{c} et du courant Iₘ seulement.

Dans un mode de réalisation de l'invention, l'unité d'initialisation calcule trois coefficients a, b, c d'une équation du second degré liant la consigne C_{c} et le couple Cₘ et trois coefficients a', b', c' d'une équation du second degré liant le courant Iₘ et le couple Cₘ. L'utilisation d'une équation du second degré est bien adaptée à la mise en oeuvre de moteurs électriques sur une plage déterminée en dehors de leur zone de fonctionnement linéaire. Pour la mise en oeuvre sur une plage très large, on peut prévoir l'utilisation d'une équation de degré plus élevé ou encore de tout autre type d'équation mathématique.

Le programme d'ordinateur, selon un aspect de l'invention, comprend des moyens de code programme pour mettre en oeuvre les étapes du procédé ci-dessus.

Le support, selon un aspect de l'invention, est capable d'être lu par un dispositif de lecture de moyens de code programme qui s'y trouvent stockés et qui sont aptes à mettre en oeuvre les étapes du procédé ci-dessus.

Un mode de réalisation particulier de l'invention est illustré par les dessins annexés :
la figure 1 est une vue schématique d'un moteur, d'un couple mètre et d'un étalon ;
la figure 2 est une vue schématique d'une commande de moteur dans son environnement ;
la figure 3 est une vue schématique fonctionnelle d'une commande de moteur ;
la figure 4 est un organigramme des étapes de procédé ; et
la figure 5 est une vue schématique d'un appareil de mesure de couple.

Il convient ici de rappeler que l'association de petits moteurs électriques à courant continu sans balai (en langue anglaise "brushless") avec un circuit de commande électronique adapté permet de refermer la boucle d'un processus de commande réalisé traditionnellement sans retour d'informations. Ces moteurs électriques sans balai ont la particularité d'appliquer un couple constant, directement proportionnel au courant d'alimentation et de tourner à une vitesse liée à une fréquence de commutation du courant dans leur bobine, indépendamment de la valeur dudit courant.

Pour réaliser un vissage correct, on cherche donc à maîtriser le courant maximum dont le moteur peut disposer durant le vissage et à assurer une fréquence de commutation du courant dans les bobines proportionnel à la vitesse de la machine. En mesurant le courant que consomme réellement le moteur, on peut connaître la valeur du couple appliquée par une tête de vissage associée au moteur et utiliser cette information pour décider, dans le cas d'une application d'embouteillage, de l'éjection automatique d'un emballage ou d'une bouteille dont le bouchage serait hors des tolérances que l'on s'est fixé.

Toutefois, se pose la question de la validité de l'estimation du couple réellement appliqué en fonction du courant délivré par un variateur de commande du moteur, ainsi que celle de la mesure du couple par l'intermédiaire du courant consommé.

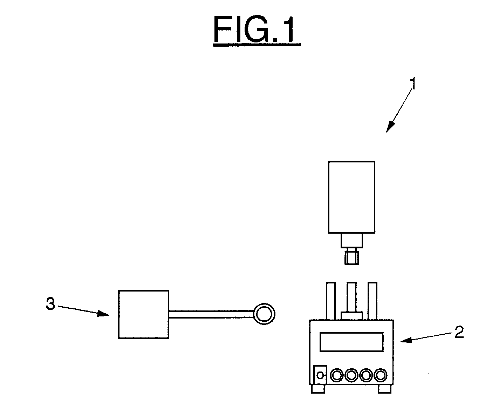

Comme on peut le voir sur la figure 1, il est proposé d'associer à un moteur électrique 1 un appareil de mesure de couple 2 et un étalon de couple 3. On peut ainsi, par étalonnage, établir une correspondance fiable entre une consigne d'alimentation de moteur, une mesure de courant consommé et un couple réellement appliqué. L'appareil de mesure de couple 2 peut lui-même être référencé au moyen de l'étalon de couple 3 constitué d'une masse fixée à l'extrémité d'un bras de levier. L'appareil de mesure de couple 2 comprend un capteur de couple et une unité électronique de commande permettant de réaliser une séquence de mesure et le calcul des paramètres de contrôle de chaque moteur.

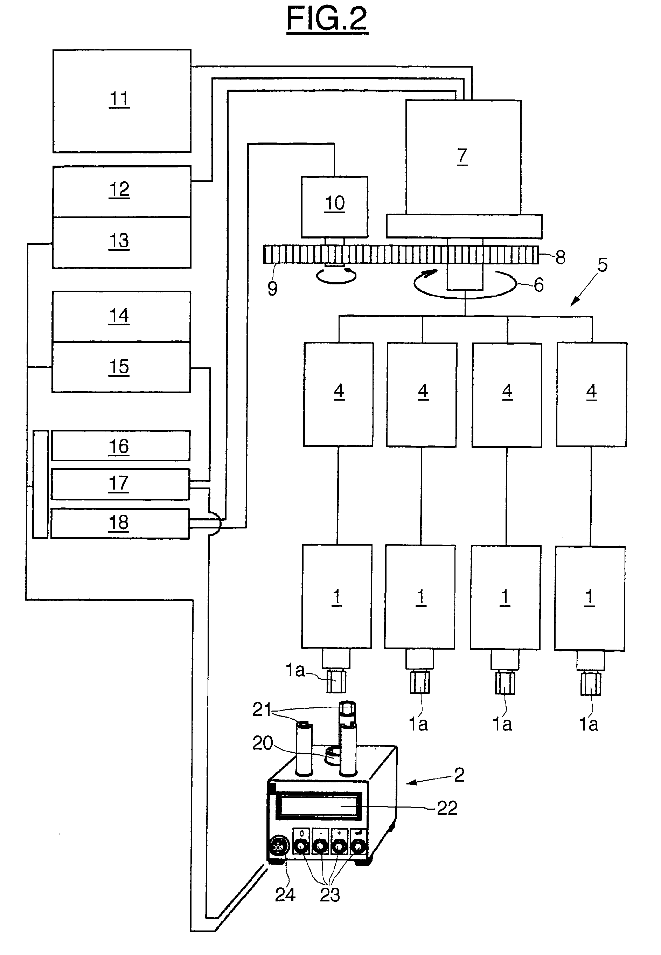

La figure 2 a plus particulièrement trait à une application dans le domaine de l'embouteillage. On rappellera ici qu'une machine de vissage de capsules sur des bouteilles est généralement installée dans une chaîne de traitement de bouteilles. Les bouteilles décrivent dans la machine une trajectoire en arc de cercle au cours de laquelle elles reçoivent une capsule qui est vissée. Les bouteilles sortent ensuite de la machine. Les capsules sont prises une par une par des organes de préhension qui s'approchent du goulot d'une bouteille, par exemple par un mouvement vertical vers le base et sont ensuite entraînés en rotation chacun par un moteur et ce au cours de la trajectoire en arc de cercle des bouteilles dans la machine.

De façon schématique, on voit donc que la machine de vissage de capsules comprend une pluralité de moteurs 1 chacun associé à un variateur 4 apte à lui fournir une alimentation électrique adéquate. Les organes de préhension qui sont normalement montés sur l'arbre de sortie des moteurs n'ont pas été représentés. Les moteurs 1 et les variateurs 4 font partie d'un ensemble tournant généralement appelé tourelle 5 apte à tourner par exemple dans le sens de la flèche 6. La tourelle 5 est équipée d'un collecteur tournant 7 permettant le passage de signaux entre les variateurs 4 et des parties non tournantes de la machine. Il est également prévu une roue dentée 8 solidaire de la tourelle 5 et engrenant avec une autre roue dentée 9 portée par un arbre pourvu d'un capteur de position angulaire 10 qui émet en sortie un signal électrique représentatif de la position angulaire de la roue dentée 9 et par conséquent de la roue dentée 8 et de la tourelle 5. Le capteur 10 est monté sur une partie non tournante de la machine.

La machine comprend encore une alimentation de puissance 11 reliée au collecteur tournant 7 et apte à fournir aux variateurs 4 l'énergie électrique nécessaire à l'entraînement des moteurs 1, une alimentation de contrôle 12 également reliée au collecteur tournant 7 et apte à fournir au variateurs 4 une alimentation de faible puissance, du type destiné à des cartes électroniques des variateurs 4, sous la forme d'une tension continue 12 ou 24 volts, et une alimentation de contrôle 13 destinée à des parties non tournantes de la machine.

La machine comprend, en outre, un interface utilisateur 14, par exemple pourvu de moyens d'affichage d'informations du type écran ou voyants lumineux et d'un moyen d'entrée de commande telle que des boutons de commande ou un écran tactile, un automate 15, une unité centrale 16, un bus de communication 17, par exemple de type RS 232, et un bus de communication haut débit 18 par exemple du type CAN.

L'alimentation de contrôle 13 est reliée à l'interface utilisateur 14, à l'automate 15, à l'unité centrale 16 et est capable d'être reliée de façon amovible à l'appareil de mesure de couple 2. L'automate 15 est apte à communiquer avec les autres parties de la machine par le bus 17. Le capteur de position 10 est connecté au bus haut débit 18. Il en est de même du collecteur tournant 7 de façon que les informations en provenance ou à destination des variateurs 4 puissent être échangées de façon rapide. L'unité centrale 16 est reliée à la fois au bus 17 et au bus 18. L'automate 15 sert au pilotage des fonctions et des contrôles de la machine et donne les consignes de bouchage à l'unité centrale 16, ces consignes étant choisies à l'aide de l'interface utilisateur 14.

Les variateurs 4 se présentent sous la forme de modules de contrôle et de puissance obéissant aux consignes de l'unité centrale 16 via le bus à haut débit 18 pour démarrer, arrêter les moteurs, réguler la vitesse, limiter le couple, surveiller les déplacements en rotation des moteurs, par exemple par incrément de 10°, mesurer le courant consommé, en stocker des échantillons et rendre compte de l'action effectuée et de son statut.

Les moteurs 1 peuvent être, par exemple, composés d'un stator à trois bobines réparties sur un grand nombre d'encoches. Chaque moteur 1 peut être muni de trois capteurs à effet hall et d'un rotor comportant 12 aimants permanents, tout en étant encapsulés dans un boîtier étanche. Le rotor est monté sur un arbre maintenu par un roulement à double rangées de billes, se terminant par une extrémité d'entraînement 1a, de type six pans pour l'accouplement rapide à des systèmes de préhension des capsules ou pour coopérer avec l'appareil de mesure de couple 2.

L'appareil de mesure de couple 2 comprend un boîtier 19 sur une face duquel est prévue une douille 20 capable de s'accoupler en rotation avec l'extrémité 1a de l'arbre d'un moteur 1 pour permettre une transmission du couple appliquée par le moteur 1 audit appareil de mesure de couple 2. Sur la même face du boîtier 19, sont prévus une pluralité (ici 3) de doigts 21 dont la forme et les dimensions sont adoptées à la forme extérieure des moteurs 1 pour permettre le blocage en rotation de l'appareil de mesure du couple 2 sur le moteur 1 permettant ainsi une solidarisation rapide et provisoire en rotation de l'appareil de mesure de couple 2 sur un moteur 1 et la transmission d'un couple par l'extrémité 1a de l'arbre du moteur 1 à la douille 20.

Sur une autre face du boîtier 19 de l'appareil de mesure du couple 2, sont prévus un écran d'affichage 22, une pluralité de boutons de commande 23 et une prise 24 pour liaison par le bus 17.

En fonctionnement, le choix du type de bouchage, réalisé à l'aide de l'interface utilisateur 14 provoque l'envoi par le bus 17 des paramètres à mettre en oeuvre émis par l'automate 15 à destination de l'unité centrale 16, à savoir : position angulaire de marche et d'arrêt, consigne de couple et de vitesse, type de mouvement des moteurs, demande des résultats tels que couple appliqué et statut du variateur. Les valeurs angulaires sont stockées dans l'unité centrale 16 qui déclenchera à la lecture du signal de position émis par le capteur de position 10, en temps réel, les ordres nécessaires aux variateurs 4. Les informations retournées par les variateurs 4 de l'unité centrale 16 peuvent être soit renvoyées à l'automate 15 pour traitement, en particulier éjection des emballages ou bouteilles défectueux ou soit être traitées localement par l'unité centrale 16. Dans ce cas, une sortie logique de l'unité centrale 16 est apte à activer l'éjection.

Plus précisément, à la mise sous tension, l'automate 15 initialise toutes les fonctions de contrôle de la machine, entraînant en rotation à vitesse lente la tourelle 5 pour chercher un point zéro du capteur de position 10 et attend que l'unité centrale 16 soit prête à communiquer. L'unité centrale 16 effectue un échantillonnage de mesure de couple de façon globale pour tous les variateurs 4 afin de déterminer une fréquence d'acquisition proportionnelle à la vitesse réelle de la machine, calcule les tables courant/couple moteur et couple appliqué /courant, ces tables étant recalculées à chaque mise sous tension à partir de coefficients a, b et c respectivement a', b' et c' qui relient le couple moteur Cₘ et la consigne du couple C_{c} ainsi que le courant mesuré Iₘ et le couple moteur Cₘ. L'unité centrale 16 attend la mise à zéro du capteur de position 10, signale l'acquisition dudit zéro à l'automate 15 qui envoie le paramétrage : format d'emballage, vitesse, couple, etc. L'unité centrale 16 transmet au variateur 4 les paramètres de vissage, vitesse, couple, temps de maintien au couple. Les variateurs 4 attendent les paramètres et les ordres d'exécution. On entend par couple moteur Cₘ, le couple réel appliqué.

En fonctionnement continu, l'unité centrale 16 informée d'un angle de tourelle 5 correspondant à un début de vissage à exécuter par un moteur 1 donné, calcule l'angle du moteur suivant. L'unité centrale 16 associe l'angle avec la fonction à faire exécuter, vérifie l'autorisation de l'automate 15 en cas de manque de bouteille, prépare le message à envoyer au variateur 4 correspondant et l'envoie.

Le variateur 4 reçoit l'ordre de marche et son paramétrage, démarre le moteur 1 associé et effectue l'acquisition du courant consommé Iₘ et le compare à la consigne de couple C_{c}. La consigne C_{c} étant atteinte, le couple est maintenu pendant une durée prédéterminée puis le moteur 1 et l'acquisition de la valeur du courant sont stoppés, les derniers points de mesure étant gardés en mémoire. La moyenne du couple maximum sur une pluralité de valeurs est calculée et mémorisée. L'unité centrale 16 informée de l'angle de fin de vissage, calcule la position angulaire du moteur 1 suivant. L'unité centrale 16 associe l'angle avec la fonction à faire exécuter, prépare le message à envoyer au variateur 4 correspondant et l'envoie. La variateur 4 reçoit l'ordre d'arrêt, confirme l'arrêt du moteur 1 et envoie à l'unité centrale 16 une information relative au courant mesuré Iₘ et à la position angulaire d'arrêt. L'unité centrale 16 calcule le couple appliqué Cₘ, le compare à la consigne C_{c} et met le résultat à la disposition de l'automate 15. Les cycles de chaque tête de vissage se poursuivent jusqu'à la dernière tête, le passage à zéro du capteur de position 10 réinitialisant le calcul des positions angulaires.

En mode étalonnage, le traitement des positions angulaires par l'unité centrale 16 est désactivé et l'appareil de mesure du couple 2 est alimenté par l'alimentation de contrôle 13 et relié à l'unité centrale 16 par un bus 17. L'unité centrale 16 transmet à l'appareil de mesure de couple 2 les paramètres de la machine d'embouteillage, par exemple nombre de têtes, temps de maintien du couple, et couple maximum des moteurs.

Pour une tête de vissage donnée, l'appareil de mesure de couple 2 envoie à l'unité centrale 16 la date du jour et l'unité centrale 16 renvoie la date du dernier étalonnage de la tête. Cette date peut être affichée sur l'écran 22 avant la saisie du couple d'étalonnage par l'utilisateur. La valeur du couple d'étalonnage déterminée par l'utilisateur est envoyée à l'unité centrale 16 qui déclenche une séquence de mesures ou rend compte des défauts constatés.

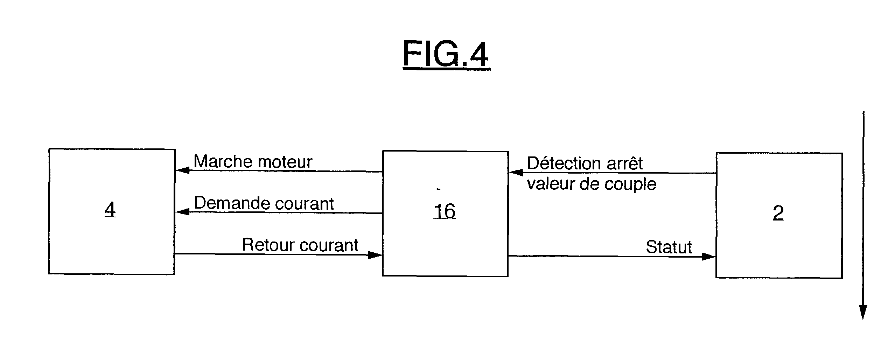

Une séquence d'étalonnage comprend quatre mesures respectivement pour un couple fort, un couple moyen, un couple faible et le couple d'étalonnage entré par l'utilisateur. Chaque mesure se décompose comme suit, voir figure 4 :
- mise en marche du moteur 1 par le variateur 4 associé sur ordre de l'unité centrale 16,
- détection de la valeur de couple à l'arrêt du moteur 1 par l'appareil de mesure de couple 2 et envoie de ladite valeur de couple à l'unité centrale 16,
- demande de la valeur de courant par l'unité centrale 16 au variateur 4,
- envoi par le variateur 4 de la valeur de courant mesuré, à l'unité centrale 16,
- envoi par l'unité centrale 16 à l'appareil de mesure de couple 2 d'une information relative au statut de l'étalonnage.

Après les trois mesures de couples fort, moyen et faible, l'unité centrale 16 calcule les nouveaux coefficients d'étalonnage avec des équations quadratiques. En d'autres termes, l'unité centrale 16 calcule trois coefficients a, b et c d'une équation du second degré liant la consigne de couple et le couple et trois coefficients a', b' et c' d'une équation du second degré liant le courant mesuré Iₘ et le couple Cₘ.

La quatrième mesure dédiée au couple d'étalonnage entré par l'utilisateur s'effectue comme précédemment à ceci près que l'unité centrale 16 retourne à l'appareil de mesure de couple 2, à la fin de la mesure, le couple calculé avec les nouveaux paramètres d'étalonnage aux fins d'affichage sur l'écran 22 et/ou le couple mesuré et/ou un message d'erreur en cas d'écart entre le couple calculé et le couple mesuré, supérieur à un plafond prédéterminé.

A la fin de l'étalonnage, l'appareil de mesure de couple 2 est retiré et est donc désolidarisé du moteur 1 et de l'extrémité 1a de l'arbre. On peut alors procéder au montage d'un élément de préhension de capsule sur ladite extrémité 1a pour remettre en service la machine d'embouteillage.

Connaissant les six coefficients a, b, c, a', b' et c', on connaît de façon précise le couple réel en fonction de la consigne C_{c} et du courant mesuré Iₘ. A partir de ces six coefficients, l'unité centrale 16 est capable de calculer des tables de correspondance. Lors du fonctionnement normal, l'unité centrale transforme la valeur de courant mesuré Iₘ en une valeur de couple grâce aux coefficients précités. L'ensemble des coefficients, automatiquement recalculés à la fin de la procédure d'étalonnage sont stockés dans l'unité centrale 16 pour chacune des têtes de la machine. Plus particulièrement, la procédure d'étalonnage des têtes ne peut s'exécuter que dans un mode dit "étalonnage", de la machine permettant de faire tourner la tourelle 5 au coup par coup.

La connexion au moyen du bus 17 de l'appareil de mesure de couple 2 provoque automatiquement la mise en marche de l'unité centrale 16 et l'initialisation du programme d'étalonnage. L'utilisateur se voit alors proposé de saisir et de valider le numéro de la tête à étalonner. L'utilisateur indique ensuite à l'appareil de mesure du coupe 2, le couple d'utilisation ou, à défaut, la valeur moyenne de la plage utilisée sur la machine. Cette saisie n'est à exécuter que lors d'un changement de consigne. Bien entendu, on étalonnera régulièrement l'appareil de mesure de couple 2 au moyen de l'étalon 3 pour conserver l'exactitude des mesures.

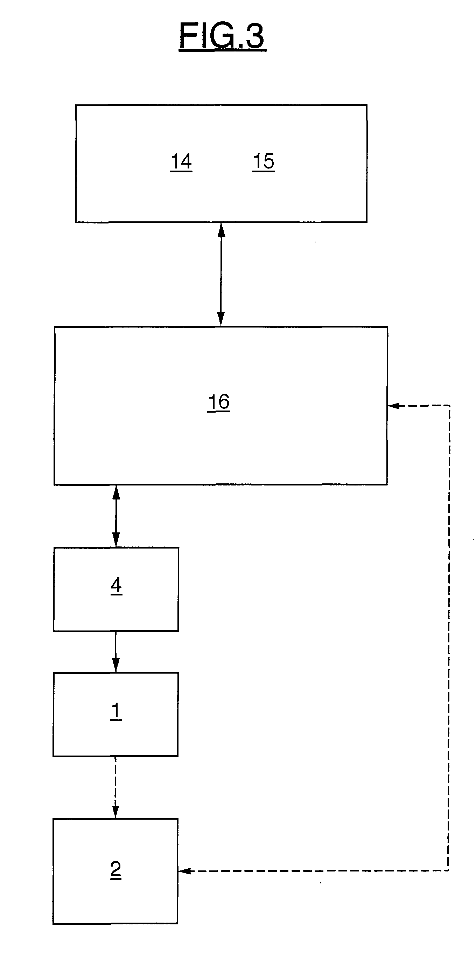

Sur la figure 3, sont représentées de façon schématique les liaisons entre les différents organes. L'interface 14 qui est associée à l'automate 15 envoie les paramètres de vissage et reçoit les résultats pour affichage. L'unité centrale 16 effectue l'acquisition des données, le calcul des coefficients d'étalonnage, le lancement des ordres de fonctionnement, la récupération et la transmission des résultats à l'automate 15 et l'interface 14. Pour ce faire, l'unité centrale 16 communique avec le variateur 4 qui lui-même envoie des ordres au moteur 1. L'appareil de mesure de couple 2 est relié de façon amovible à la fois, mécaniquement au moteur 1 et par liaison du type bus de communication avec l'unité centrale 16.

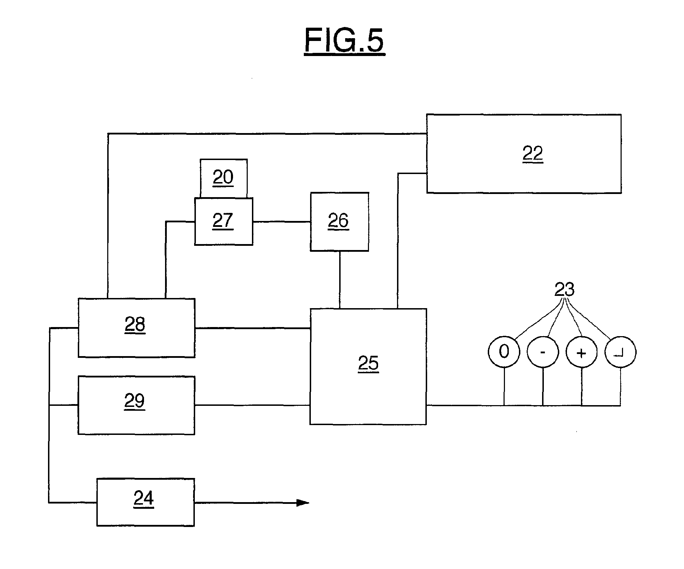

Enfin, sur la figure 5, est illustrée la structure interne de l'appareil de mesure de couple 2. L'appareil de mesure de couple 2 comprend outre la douille 20, l'écran 22 qui peut être du type afficheur à cristaux liquides et les boutons poussoirs 23, un micro-contrôleur 25, un amplificateur de mesure 26, un capteur de couple 27, un module d'alimentation 28 et un interface 29 destiné à la liaison avec le bus 17. Le connecteur 24 est relié à la fois à l'alimentation 28 et à l'interface 29. L'alimentation 28 assure la fourniture d'énergie électrique à l'afficheur 22, au micro contrôleur 25 et au capteur de couple 27. Le capteur de couple 27 est associé à la douille 20 de façon qu'il puisse mesurer le couple exercé sur ladite douille 20 et envoie un signal de sortie à l'amplificateur 26 dont la sortie est elle-même reliée au micro-contrôleur 25. L'afficheur 22 est commandé par le micro-contrôleur 25 qui est également relié au bouton poussoir 23 et à l'interface 29 pour l'émission et la réception d'informations en provenance du bus 17.

## Revendications

1. Dispositif de commande d'au moins un moteur électrique (1), **caractérisé par** le fait qu'il comprend au moins un moyen de mesure du courant Iₘ consommé par le moteur, un moyen de mesure (2) du couple Cₘ fourni par le moteur, au moins un moyen d'alimentation (4) du moteur, et une unité d'initialisation (16) capable de générer une consigne de couple C_{c}, et de recevoir et de traiter des informations relatives au courant Iₘ et au couple Cₘ, pour en déduire une relation entre la consigne C_{c}, le couple Cₘ et le courant Iₘ pour pouvoir déterminer le couple Cₘ à partir de la consigne C_{c} et du courant Iₘ.

2. Dispositif selon la revendication 1, **caractérisé par** le fait que le moyen de mesure du couple Cₘ fourni par le moteur est amovible.

3. Dispositif selon la revendication 1 ou 2, **caractérisé par** le fait qu'il comprend une unité de calcul (15) associée à des moyens mémoire et à un interface utilisateur (14), un premier bus de données (18) entre l'unité d'initialisation et le moyen d'alimentation du moteur, et un second bus de données (17) entre l'unité d'initialisation et l'unité de calcul.

4. Dispositif selon l'une quelconque des revendications précédentes, **caractérisé par** le fait que le moyen de mesure du couple Cₘ est pourvu d'un étalon amovible (3).

5. Système électromécanique comprenant au moins un dispositif selon l'une quelconque des revendications précédentes.

6. Procédé de commande d'au moins un moteur électrique, dans lequel une unité d'initialisation génère une consigne de couple C_{c}, à destination d'un moyen d'alimentation du moteur, au moins un moyen de mesure du courant mesure le courant Iₘ consommé par le moteur, un moyen de mesure du couple mesure le couple Cₘ fourni par le moteur, l'unité d'initialisation reçoit et traite des informations relatives au courant Iₘ et au couple Cₘ, pour en déduire une relation entre la consigne C_{c}, le couple Cₘ et le courant Iₘ pour pouvoir déterminer le couple Cₘà partir de la consigne C_{c} et du courant Iₘ.

7. Procédé selon la revendication 6, dans lequel le moyen de mesure du couple est installé au préalable, puis ôté après la mesure d'au moins une valeur du couple Cₘ.

8. Procédé selon la revendication 6 ou 7, dans lequel l'unité d'initialisation génère trois valeurs de consigne de couple C_{c}, le moyen de mesure du courant mesure n valeurs de courant Iₘ consommé par le moteur, avec n supérieur à deux, le moyen de mesure du couple mesure n n valeurs de couple Cₘ fourni par le moteur, l'unité d'initialisation reçoit et traite n valeurs relatives au courant Iₘ et au couple Cₘ, pour en déduire une relation entre la consigne C_{c}, le couple Cₘ et le courant Iₘ pour pouvoir déterminer le couple Cₘà partir de la consigne C_{c} et du courant Iₘ seulement.

9. Procédé selon la revendication 8, dans lequel l'unité d'initialisation calcule trois coefficients a, b, c d'une équation du second degré liant la consigne C_{c} et le couple Cₘ et trois coefficients a', b', c' d'une équation du second degré liant le courant Iₘ et le couple Cₘ.

10. Programme d'ordinateur comprenant des moyens de code programme pour mettre en oeuvre les étapes du procédé selon l'une quelconque des revendications 6 à 9.

11. Support capable d'être lu par un dispositif de lecture de moyens de code programme qui s'y trouvent stockés et qui sont aptes à la mise en oeuvre des étapes du procédé selon l'une quelconque des revendications 6 à 9
